(19) Europäisches Patentamt / European Patent Office / Office européen des brevets

(11) **EP 3 685 466 B1**

(12) **FASCICULE DE BREVET EUROPEEN**

(45) Date de publication et mention
de la délivrance du brevet:
**08.09.2021 Bulletin 2021/36**

(21) Numéro de dépôt: **18769383.3**

(22) Date de dépôt: **20.09.2018**

(51) Int Cl.:
**H01M 10/0562** (2010.01)    **H01M 10/052** (2010.01)
**H01M 10/0585** (2010.01)

(86) Numéro de dépôt international:
**PCT/EP2018/075516**

(87) Numéro de publication internationale:
**WO 2019/057840 (28.03.2019 Gazette 2019/13)**

(54) **ELECTROLYTE SOLIDE POUR ELEMENT ELECTROCHIMIQUE LITHIUM-ION**

FESTELEKTROLYT FÜR EINE LITHIUM-IONEN-BATTERIEZELLE

SOLID ELECTROLYTE FOR A LITHIUM-ION ELECTROCHEMICAL ELEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.09.2017 FR 1758782**

(43) Date de publication de la demande:
**29.07.2020 Bulletin 2020/31**

(73) Titulaires:
 • **SAFT
 92300 Lavallois-Perret (FR)**
 • **Universite De Paris Est Creteil Val De Marne Upec
 94010 Créteil Cedex (FR)**
 • **Centre National de la Recherche Scientifique
 CNRS
 75794 Paris Cedex 16 (FR)**

(72) Inventeurs:
 • **JORDY, Christian
 33440 Saint Louis De Montferrand (FR)**
 • **LOPEZ-ARANGUREN, Pedro
 28002 Madrid (ES)**
 • **DAO, Ha Anh
 Hanoi 10000 (VN)**
 • **LATROCHE, Michel
 94240 L'Hay Les Roses (FR)**
 • **ZHANG, Junxian
 91510 Lardy (FR)**
 • **CUEVAS, Fermin
 91510 Lardy (FR)**

(74) Mandataire: **Hirsch & Associés
 154 Boulevard Haussmann
 75008 Paris (FR)**

(56) Documents cités:
**US-A1- 2016 156 064**

 • **SYLVAIN BOULINEAU ET AL: "Mechanochemical
 synthesis of Li-argyrodite LiPS(=Cl, Br, I) as
 sulfur-based solid electrolytes for all solid state
 batteries application", SOLID STATE IONICS,
 NORTH HOLLAND PUB. COMPANY.
 AMSTERDAM; NL, NL, vol. 221, 5 juin 2012
 (2012-06-05), pages 1-5, XP028432169, ISSN:
 0167-2738, DOI: 10.1016/J.SSI.2012.06.008
 [extrait le 2012-06-12]**
 • **YAMAUCHI AKIHIRO ET AL: "Preparation and
 ionic conductivities of (100 -
 x)(0.75Li2S0.25P2S5)xLiBH4glass electrolytes",
 JOURNAL OF POWER SOURCES, vol. 244, 28
 novembre 2012 (2012-11-28), pages 707-710,
 XP028691995, ISSN: 0378-7753, DOI:
 10.1016/J.JPOWSOUR.2012.12.001**

- **ATSUSHI UNEMOTO ET AL: "Fast lithium-ionic conduction in a new complex hydride-sulphide crystalline phase", CHEMICAL COMMUNICATIONS, vol. 52, no. 3, 6 novembre 2015 (2015-11-06), pages 564-566, XP055428599, GB ISSN: 1359-7345, DOI: 10.1039/C5CC07793A -& Atsushi Unemoto ET AL: "Electronic Supporting Information (ESI) for: Fast lithium-ionic conduction in a new complex hydride-sulphide crystalline phase", , 6 novembre 2015 (2015-11-06), XP055428600, Extrait de l'Internet: URL:http://www.rsc.org/suppdata/c5/cc/c5cc 07793a/c5cc07793a1.pdf [extrait le 2017-11-24]**

## Description

### DOMAINE TECHNIQUE

Le domaine technique de l'invention est celui des électrolytes solides inorganiques pour éléments électrochimiques au lithium ou lithium-ion. Le domaine technique est aussi celui des procédés de préparation de tels électrolytes solides inorganiques.

### ETAT DE LA TECHNIQUE

Les éléments électrochimiques rechargeables lithium-ion sont connus de l'état de la technique. En raison de leur densité d'énergie massique et volumique élevées, ils constituent une source d'énergie électrique prometteuse pour les dispositifs électroniques portatifs, les véhicules électriques et hybrides et les systèmes stationnaires de stockage de l'électricité. Cependant, ces éléments contiennent fréquemment un électrolyte liquide organique qui, en cas d'emballement thermique de l'élément, réagit de façon exothermique avec les matières actives des électrodes négative et positive et dans certains cas, les éléments peuvent prendre feu, ce qui constitue un risque pour la sécurité de l'utilisateur.

Les éléments électrochimiques rechargeables lithium-ion comprenant un électrolyte solide offrent une solution à ce risque d'emballement thermique. En utilisant un électrolyte solide, on supprime la réaction exothermique entre les matières actives et l'électrolyte, ce qui améliore considérablement la sécurité pour l'utilisateur. L'électrolyte solide peut être un composé inorganique.

L'un des principaux avantages des électrolytes solides inorganiques est que ces derniers sont en général conducteurs d'un seul type d'ions, ici, le cation $Li^+$ qui est donc échangé avec les matières actives pour assurer les réactions électrochimiques. Peu de polymères organiques utilisés comme électrolyte solide se comportent de la même façon et quand c'est le cas, leur résistivité est largement augmentée. Seuls donc les ions $Li^+$ sont mobiles pour les électrolytes inorganiques. Les autres ions, anions et cations, sont immobiles. Le nombre de transport du lithium vaut 1 (ou tend vers 1) ; cette caractéristique permet de supprimer les phénomènes de diffusion ionique de l'électrolyte ce qui améliore les performances aux régimes rapides. Par ailleurs, les électrolytes inorganiques rendent impossibles la migration d'espèces chimiques dans l'épaisseur du séparateur, ce qui réduit considérablement les phénomènes d'autodécharge. Les électrolytes solides élargissent le choix des matériaux d'électrode et peuvent étendre la fenêtre de potentiel. La conductivité électronique doit néanmoins être inférieure à $10^{-12}$ S/cm pour accepter un stockage de plusieurs mois.

Il convient également de tenir compte dans le choix d'un électrolyte solide inorganique de la résistance de l'électrolyte solide à l'interface électrode car cette résistance à l'interface est tout aussi importante et est souvent aussi grande que la résistivité de l'électrolyte. Pour cette raison, il faut aussi prendre en considération la résistance de contact de particules à particules d'électrolyte s'il s'agit d'un matériau pulvérulent et pas seulement celle du cœur. Généralement la résistance associée à l'échange d'ions à travers la couche de passivation (SEI) formée à la surface de l'électrode négative sera plus élevée que celle d'un électrolyte liquide ou d'un polymère susceptible de se déformer.

Des travaux sur les électrolytes solides amorphes (verre) hautement conducteurs à base de sulfure de lithium $Li_2S$, $SiS_2$, $P_2S_5$ et $B_2S_3$ ont été rapportés dès le début des années 1980.

Le document J. Amer. Ceram. Soc. 84 (2001) 477 décrit la fabrication par broyage planétaire suivi d'une compression d'un mélange comprenant 75% en moles de $Li_2S$ et 25% en mole de $P_2S_5$. Ce mélange présente une conductivité ionique à 25°C de 200 $\mu$S/cm.

Il est également connu d'utiliser comme électrolyte solide d'un élément électrochimique lithium-ion un composé $Li_6PS_5X$ de type argyrodite où X désigne un atome d'halogène. Ce type de composé est obtenu en faisant réagir $Li_2S$ avec $P_2S_5$ et avec un halogénure de lithium LiX.

Le document JP 2016-134316 décrit un électrolyte solide qui est un mélange d'un premier composé à base de soufre, par exemple $Li_6PS_5X$, et d'un second composé qui est une solution solide de $LiX-LiBH_4$ où X est un halogène. Dans ce document, il est décrit que les particules de solution solide de $LiX-LiBH_4$ viennent combler les volumes vides existant entre les particules du composé à base de soufre. Le procédé de fabrication de l'électrolyte solide du document JP 2016-134316 est effectué en plusieurs étapes :

- une première étape de broyage d'un mélange contenant $Li_2S$, $P_2S_5$ et LiX pour former un composé $Li_6PS_5X$ de type argyrodite;
- une seconde étape de formation d'une solution solide de $LiX-LiBH_4$ ;
- une troisième étape de mélange des produits issus de la première et de la seconde étape.

On peut noter que ce procédé de préparation ne permet pas l'incorporation des ions $BH_4^-$ dans la structure du composé $Li_6PS_5X$.

Le document EP-A-3 043 411 décrit un élément électrochimique comprenant un électrolyte solide. L'électrolyte solide peut être constitué de la superposition de deux couches de compositions différentes. La première couche peut comprendre un matériau à base de $Li_2S$-$P_2S_5$. La seconde couche comprend un matériau qui est une solution solide de LiX-$LiBH_4$. Comme dans le document JP 2016-134316, les ions $BH_4^-$ ne sont pas incorporés dans la structure du matériau à base de $Li_2S$-$P_2S_5$.

US 2016/156064 décrit un électrolyte solide à base de soufre pour un élément électrochimique lithium-ion, lequel électrolyte solide comprend un composé présentant une structure cristalline cubique appartenant au groupe d'espace F-43m et représenté par la formule $Li_{7-x}PS_{6-x}Ha_x$ où Ha est Cl ou Br, et où x dans la formule va de 0,2 à 1,8, et présentant une valeur de clarté L* dans un système de couleur L*a*b* de 60.0 ou plus.

SYLVAIN BOULINEAU ET AL.: "Mechanochemical synthesis of Li-argyrodite $Li_6PS_5X$ (X=Cl, Br, I) as sulfur-based solid electrolytes for all solid state batteries application", SOLID STATE IONICS, vol. 221, 5 juin 2012, pages 1-5, décrit un procédé de préparation d'argyrodites de formule $Li_6PS_5X$ (X=Cl, Br, I) à l'aide d'un broyeur à billes. Un élément électrochimique à lithium tout solide constitué de l'association $LiCoO_2$/Electrolyte solide/indium a été fabriqué en utilisant $Li_6PS_5Cl$ comme électrolyte solide. Ses performances à température ambiante ont été mesurées.

YAMAUCHI AKIHIRO ET AL: "Préparation and ionic conductivities of (100-x)(0.75Li2S•0.25P2S5)•xLiBH4 glass electrolytes", JOURNAL OF POWER SOURCES, vol. 244, (2013) pages 707-710, décrit la préparation d'un électrolyte de formule $(100-x)(0.75Li_2S•0.25P_2S_5)•xLiBH_4$ avec $0 \leq x$ (mol%) $\leq 33$) à partir d'un mélange de $75Li_2S•25P_2S_5$ (mol%) et d'un cristal de $LiBH_4$ en utilisant une technique de broyage mécanique. Les effets de l'addition de $LiBH_4$ sur la structure et les propriétés de l'électrolyte ont été examinées. La conductivité de l'électrolyte augmente proportionnellement à la teneur en $LiBH_4$. La conductivité la plus élevée est de $1,6 \times 10^{-3}$ S.cm$^{-1}$ à température ambiante. L'électrolyte peut fonctionner jusqu'à un potentiel de 5 V par rapport au couple $Li^+$/Li. Un élement électrochimique tout solide de type $Li/TiS_2$ utilisant l'électrolyte solide fonctionne avec succès à la température de 25°C.

On cherche de nouveaux composés pouvant être utilisés comme électrolyte solide d'un élément électrochimique lithium-ion.

On recherche également un électrolyte solide présentant une conductivité ionique améliorée.

RESUME DE L'INVENTION

A cet effet, l'invention propose un composé de formule $Li_{7-x}PS_{6-x}X_{x-z}(BH_4)_z$ dans lequel :

X est choisi dans le groupe consistant en Cl, Br, I, F et CN ;
$0 < x \leq 2$ ;
$0 < z \leq 0,50$.

Ce composé est caractérisé par une substitution partielle de l'ion halogénure $X^-$ par l'ion borohydrure $BH_4^-$. Il présente une conductivité ionique supérieure à celle du composé $Li_{7-x}PS_{6-x}X_x$ dans lequel l'halogénure $X^-$ n'est pas substitué. La conductivité ionique peut être multipliée par un facteur allant jusqu'à 7 lorsque X est I et lorsque le taux de substitution est d'environ 17%. L'utilisation du composé selon l'invention comme électrolyte solide d'un élément électrochimique lithium-ion permet de diminuer la résistance interne de l'élément et permet à l'élément de fournir une tension en décharge plus élevée pour un régime de décharge donné.

Selon un mode de réalisation, x=1.

Selon un mode de réalisation, X est I ou Cl.

Selon un mode de réalisation, $0,1 \leq z \leq 0,35$.

Selon un mode de réalisation, $0,1 \leq z \leq 0,20$.

Selon un mode de réalisation, $0,15 \leq z \leq 0,20$.

Selon un mode de réalisation, le composé est sous forme amorphe.

L'invention a également pour objet un procédé de préparation du composé, ledit procédé comprenant les étapes de :

a) mise à disposition d'un mélange comprenant $Li_2S$, $P_2S_5$, $LiBH_4$ et LiX où X est choisi dans le groupe consistant en Cl, Br, I, F et CN ;
b) broyage du mélange pendant une durée suffisante pour permettre l'incorporation de LiBH4 dans le composé $Li_{7-x}PS_{6-x}X_{x-z}(BH_4)_z$.

Selon un mode de réalisation, l'étape b) de broyage est effectuée pendant une durée d'au moins 15 heures, de préférence au moins 20 heures.

L'invention a également pour objet un élément électrochimique comprenant un électrolyte solide comprenant le composé tel que décrit ci-avant.

Selon un mode de réalisation, l'électrolyte solide ne contient pas $LiBH_4$.

Selon un mode de réalisation, l'élément électrochimique comprend en outre:

- au moins une électrode négative comprenant une matière active choisie dans le groupe consistant en le carbone, l'étain, le silicium, le lithium et l'indium ;
- au moins une électrode positive comprenant une matière active choisie dans le groupe consistant en les oxydes lithiés de métaux de transition et les composés soufrés.

Selon un mode de réalisation, la matière active de l'électrode négative est choisie dans le groupe consistant en le lithium et l'indium et la matière active de l'électrode positive est choisie dans le groupe consistant en S, $TiS_2$, $TiS_3$, $TiS_4$, NiS, $NiS_2$, CuS, $FeS_2$, $Li_2S$, $MoS_3$, les polyacrylonitriles-soufre, le dithiooxamide et les composés disulfurés.

L'invention a également pour objet un procédé de fabrication d'un élément électrochimique à électrolyte solide, ledit procédé comprenant les étapes de :

a) préparation d'un mélange contenant une matière électrochimiquement active positive et éventuellement le composé tel que décrit ci-avant;

b) dépôt sur le mélange obtenu à l'étape a) d'une couche du composé tel que décrit ci-avant pour former un électrolyte solide;

c) dépôt d'au moins une couche d'un mélange contenant une matière électrochimiquement active négative et éventuellement le composé tel que décrit ci-avant sur une face libre de la couche de composé formant l'électrolyte solide.

Enfin l'invention a également pour objet l'utilisation d'un anion contenant du bore comme substituant d'un ion halogénure dans un composé de formule $Li_{7-x}PS_{6-x}X_x$ où X est choisi dans le groupe consistant en Cl, Br, I, F et CN et $0<x\leq2$, pour augmenter la conductivité ionique de ce composé.

## DESCRIPTION DES FIGURES

La figure 1 représente schématiquement la structure d'un élément électrochimique lithium-ion tel que fabriqué dans les exemples.

« Li » et « In » désignent respectivement la couche de lithium et la couche d'indium.

« SE » désigne la couche d'électrolyte solide.

« Positive » désigne la couche contenant la matière active positive.

La figure 2 représente la conductivité ionique de composés de formule $Li_{7-x}PS_{6-x}I_{x-z}(BH_4)_z$ pour différentes valeurs du taux de substitution de l'ion halogénure I$^-$ par l'ion borohydrure : 0%, 10%, 17%, 33% et 50%.

La figure 3 représente deux spectres de diffraction des rayons X. Le spectre du haut est obtenu avec le composé de l'exemple 2. Le spectre du bas est obtenu avec le composé de l'exemple de référence 1.

La figure 4 représente les spectres de diffraction des rayons X des échantillons A, B et C décrits dans la partie expérimentale. Le spectre du bas est obtenu sur l'échantillon A. Le spectre du milieu est obtenu sur l'échantillon B. Le spectre du haut est obtenu sur l'échantillon C.

La figure 5 représente la courbe de décharge à température ambiante au régime de C/20 d'un élément électrochimique lithium-ion comprenant un électrolyte solide de formule $Li_6PS_5Cl_{0,83}(BH_4)_{0,17}$.

## EXPOSE DE MODES DE REALISATION

Le composé selon l'invention a pour formule $Li_{7-x}PS_{6-x}X_{x-z}(BH_4)_z$ dans laquelle :

X est choisi dans le groupe consistant en Cl, Br, I, F et CN
$0<x\leq2$
$0<z\leq0,50$.

De préférence, l'élément X est I ou Cl.
Ce composé est caractérisé par une substitution d'une partie de l'ion halogénure X$^-$ par l'ion borohydrure $BH_4^-$. Cette substitution a pour effet d'augmenter la conductivité ionique par rapport à celle du composé $Li_{7-x}PS_{6-x}X_x$ non substitué.

Dans un mode de réalisation, x est supérieur ou égal à 0,1.

Dans un mode de réalisation, z est supérieur ou égal à 0,05.

Dans un mode de réalisation, z est inférieur ou égal à 0,35.

La Demanderesse a observé de manière surprenante que l'augmentation de la conductivité ionique était maximale lorsque le taux de substitution se situe dans la plage allant de 10 à 20 % ($0,1 \leq z \leq 0,20$), de préférence dans la plage allant de 15 à 20 % ($0,15 \leq z \leq 0,20$). La conductivité ionique peut être multipliée par sept grâce à cette substitution.

Il a également été observé que l'augmentation de la conductivité ionique était davantage marquée lorsque le composé était dans un état amorphe. Les avantages d'une structure amorphe sont une conductivité isotrope, la facilité de fabrication en couches minces denses. On peut faire subir au composé une étape de broyage afin d'augmenter son caractère amorphe.

Il est préférable de ne pas soumettre le composé à un traitement thermique, tel qu'un recuit, car celui-ci favorise l'apparition d'une structure cristalline. Les exemples de la partie expérimentale illustrent l'effet du degré de cristallinité du composé sur sa conductivité ionique.

Le composé selon l'invention est issu d'une réaction chimique entre $LiBH_4$ et $Li_2S$, $P_2S_5$ et $LiX$. Le procédé de préparation du composé selon l'invention comprend les étapes de :

a) mise à disposition d'un mélange comprenant $Li_2S$, $P_2S_5$, $LiBH_4$ et $LiX$ où X est choisi dans le groupe consistant en Cl, Br, I, F et CN ;

b) broyage du mélange pendant une durée suffisante pour permettre l'incorporation de LiBH4 dans le composé $Li_{7-x}PS_{6-x}X_{x-z}(BH_4)_z$.

Il faut noter que selon l'invention, les ions borohydrures $BH_4^-$ sont intégrés dans la structure $Li_{7-x}PS_{6-x}X_x$ au cours du broyage. L'étape de broyage est donc conduite tant qu'il reste du borohydrure de lithium $LiBH_4$ dans le mélange, c'est-à-dire non encore incorporé à $Li_{7-x}PS_{6-x}X_x$. La durée du broyage dépend des conditions dans lesquelles le broyage est effectué (nombre de billes, volume intérieur de la jarre, vitesse de rotation du broyeur, quantité du mélange de départ, etc.). L'homme du métier saura néanmoins aisément déterminer par des essais de routine s'il reste du borohydrure de lithium dans le mélange. La technique de diffraction des rayons X peut être utilisée à cet effet pour détecter la présence de borohydrure de lithium résiduel.

De préférence, le broyage est effectué pendant une durée d'au moins 10 heures, de préférence au moins 15 heures, de préférence encore au moins 20 heures.

L'étape de broyage est généralement effectuée sous atmosphère inerte, par exemple sous argon, et sous atmosphère sèche.

De préférence, l'étape de broyage est conduite à température ambiante.

Selon l'invention, le broyage est effectué en une seule fois sur un mélange contenant tous les réactifs $Li_2S$, $P_2S_5$, $LiBH_4$ et $LiX$, contrairement au procédé de fabrication de l'électrolyte solide du document JP 2016-134316 dans lequel on fabrique dans un premier temps le composé $Li_6PS_5X$; puis dans un deuxième temps la solution solide de $LiX$-$LiBH_4$ ; et enfin le mélange de $Li_6PS_5X$ avec $LiX$-$LiBH_4$.

Le composé selon l'invention peut être utilisé comme électrolyte solide. L'épaisseur de la couche d'électrolyte solide peut varier entre 10 $\mu$m et 1 mm.

Le composé selon l'invention peut également être utilisé en mélange avec une matière active négative de l'élément électrochimique et/ou en mélange avec une matière active positive de l'élément électrochimique. De préférence, le composé selon l'invention utilisé en mélange avec la matière active négative ou avec la matière active positive est identique au composé utilisé comme électrolyte solide.

La matière active positive peut être choisie dans le groupe consistant en :

- un composé **i)** soufré choisi par exemple parmi S, $TiS_2$, $TiS_3$, $TiS_4$, $MoS_2$, $MoS_3$, FeS, $FeS_2$, CuS, NiS, $NiS_2$, $Ni_3S_2$, $Li_2S$ ;
- un composé **ii)** de formule $Li_xMn_{1-y-z}M'_yM''_zPO_4$ (LMP), où M'et M" sont différents l'un de l'autre et sont choisis dans le groupe consistant en B, Mg, Al, Si, Ca, Ti, V, Cr, Fe, Co, Ni, Cu, Mn, Zn, Y, Zr, Nb et Mo, avec $0,8 \leq x \leq 1,2$ ; $0 \leq y \leq 0,6$ ; $0 \leq z \leq 0,2$;
- composé **iii)** de formule $Li_xM_{2-x-y-z-w}M'_yM''_zM'''_wO_2$ (LMO2), où M, M', M" et M'" sont choisis dans le groupe consistant en B, Mg, Al, Si, Ca, Ti, V, Cr, Mn, Fe, Co, Ni, Cu, Zn, Y, Zr, Nb et Mo, à la condition que M ou M' ou M" ou M'" soit choisi parmi Mn, Co, Ni, or Fe ;
  M, M', M" et M'" étant différents les uns des autres; avec $0,8 \leq x \leq 1,4$ ; $0 \leq y \leq 0,5$ ; $0 \leq z \leq 0,5$; $0 \leq w \leq 0,2$ et $x+y+z+w<2$ ;
- composé **iv)** de formule $Li_xMn_{2-y-z}M'_yM''_zO_4$ (LMO), où M' et M" sont choisis dans le groupe consistant en B, Mg, Al, Si, Ca, Ti, V, Cr, Fe, Co, Ni, Cu, Zn, Y, Zr, Nb et Mo; M' et M" étant différents l'un de l'autre, et $1 \leq x \leq 1,4$ ; $0 \leq y \leq 0,6$ ; $0 \leq z \leq 0,2$ ;
- composé **v)** de formule $Li_xFe_{1-y}M_yPO_4$, où M est choisi dans le groupe consistant en B, Mg, Al, Si, Ca, Ti, V, Cr, Mn, Co, Ni, Cu, Zn, Y, Zr, Nb et Mo; et $0,8 \leq x \leq 1,2$ ; $0 \leq y \leq 0,6$;
- composé **vi)** de formule $xLi_2MnO_3$; $(1-x)LiMO_2$ où M est choisi parmi Ni, Co et Mn et $x \leq 1$ ; et un mélange de ces composés.

La matière active négative peut être choisie dans le groupe consistant en:

    **i)** un composé à base de carbone, tel que le graphite ;

    **ii)** un oxyde lithié de titane, tel que $Li_4Ti_5O_{12}$ ;

    **iii)** un métal choisi parmi le lithium, l'indium, l'aluminium, le silicium, l'étain et des alliages contenant ces métaux, de préférence un alliage de lithium et d'indium.

Un ou plusieurs liants peuvent être ajoutés au mélange contenant la matière active positive et le composé selon l'invention. Ce liant peut être choisi dans le groupe consistant en le polytétrafluoroéthylène (PTFE), le polyfluorure de vinylidène (PVDF), un caoutchouc d'éthylène-propylène-diène (EPDM), un caoutchouc de styrène-butadiène (SBR), de l'alcool polyvinylique, de la carboxyméthylcellulose (CMC). De même, un ou plusieurs liants peuvent être ajoutés au mélange contenant la matière active négative et le composé selon l'invention. Ces liants peuvent être les mêmes que ceux choisis pour la matière active positive.

Un composé bon conducteur électronique, tel que le carbone, peut aussi être ajouté au mélange contenant la matière active positive et le composé selon l'invention ou être ajouté au mélange contenant la matière active négative et le composé selon l'invention.

Le mélange contenant la matière active positive et éventuellement un ou plusieurs liants ainsi que le composé conducteur électronique peut être déposé sur un collecteur de courant pour former ainsi une électrode positive. De même, le mélange contenant la matière active négative et éventuellement un ou plusieurs liants ainsi que le composé conducteur électronique peut être déposé sur un collecteur de courant pour former une électrode négative.

Un élément électrochimique « tout solide » est obtenu en superposant au moins une électrode positive, l'électrolyte solide comprenant le composé selon l'invention et au moins une électrode négative. L'assemblage peut être obtenu par compression.

EXEMPLES

Différents composés de type argyrodite ont été synthétisés. Leur composition est indiquée dans le Tableau 1 ci-dessous.

Tableau 1 : Compositions testées

| Exemple | Composition | x | z | X |
|---------|-------------|------|------|----|
| Référence 1 | $Li_6PS_5I$ | 1,00 | 0,00 | I |
| Ex.1 | $Li_6PS_5I_{0,90}(BH_4)_{0,10}$ | 1,00 | 0,10 | I |
| Ex.2 | $Li_6PS_5I_{0,83}(BH_4)_{0,17}$ | 1,00 | 0,17 | I |
| Ex.3 | $Li_6PS_5I_{0,67}(BH_4)_{0,33}$ | 1,00 | 0,33 | I |
| Ex.4 | $Li_6PS_5I_{0,50}(BH_4)_{0,50}$ | 1,00 | 0,50 | I |
| Référence 2 | $Li_6PS_5Cl$ | 1,00 | 0,00 | Cl |
| Ex.5 | $Li_6PS_5Cl_{0,83}(BH_4)_{0,17}$ | 1,00 | 0,20 | Cl |

A titre de contre-exemple, un mélange comprenant 83% molaire de $Li_6PS_5I$ et 17% molaire de $LiBH_4$ a été préparé.

Pour les exemples, les composés sont préparés par mécanosynthèse, c'est-à-dire un broyage mécano-chimique à haute énergie. Les poudres des réactifs initiaux $Li_2S$ (Sigma Aldrich, 99,98 %), $P_2S_5$ (Sigma Aldrich, 98 %), $LiBH_4$ (Rockwood Lithium, 97,8 %), LiCl et LiI (Sigma Aldrich 99,99 %) sont mélangées en quantités stœchiométriques. Pour chaque synthèse, on place 1 g de mélange dans une jarre de 45 $cm^3$ en inox. 25 billes de 7 mm de diamètre sont également placées dans la jarre. Celle-ci est fermée de manière étanche sous argon en boite à gants. L'équipement utilisé pour le broyage est un broyeur planétaire de marque Fritsch™, de type Pulverisette 7. La durée de broyage des composés selon l'invention est de 20 heures à la vitesse de rotation de 600 trs/min. Ces conditions de broyage permettent de réaliser la réaction chimique entre les différents constituants.

Pour le contre-exemple, le composé $Li_6PS_5I$ est préparé comme décrit ci-dessus, puis il est mélangé dans les proportions stœchiométriques avec $LiBH_4$ pendant 10 min à une vitesse de 300 trs/min. Ces conditions de broyage ne permettent pas la substitution d'une partie de $I^-$ par $BH_4^-$.

Lorsque les échantillons subissent un traitement thermique, celui-ci consiste en un chauffage à 550°C pendant 5 heures dans un autoclave étanche. Ce traitement thermique provoque la recristallisation du composé.

Les analyses par diffraction des rayons X sont réalisées sur un diffractomètre de type D8 Advanced de Bruker™ en utilisant la raie K$\alpha$ du cuivre ou du molybdène. Une protection étanche permet de réaliser l'analyse sous atmosphère d'argon.

Les mesures de conductivité ionique sont effectuées sur des pastilles fabriquées à partir de poudre d'électrolyte solide. La préparation des pastilles consiste à comprimer de la poudre d'électrolyte solide dans un moule à pastiller sous une pression de 2 tonnes. Le diamètre de la pastille est de 7 mm. La pastille d'électrolyte ainsi préparée est ensuite insérée entre deux disques de lithium métallique et le tout est placé dans une cellule électrochimique de type Swagelok$^{(™)}$. Les mesures de conductivité sont réalisées à l'aide d'un potentiostat de type Autolab$^{(™)}$ PGSTAT30 en utilisant une tension sinusoïdale de fréquence variable entre 1Hz et 1MHz et une amplitude de 10mV.

**Montage des éléments électrochimiques** :

L'élément électrochimique « tout solide » est obtenu en pressant trois couches :

- la première est constituée d'un mélange contenant la matière active positive et l'électrolyte solide,
- la seconde est constituée d'électrolyte solide uniquement (cette couche joue le rôle de séparateur) et
- la troisième est constituée d'une électrode négative à base de lithium et d'indium.

- Préparation du mélange contenant la matière active positive :

La matière active positive utilisée est le sulfure de titane, $TiS_2$. Sa capacité théorique est de 239 mAh/g. Celle-ci est mélangée manuellement avec de la poudre d'électrolyte solide dans un mortier en agate en boite à gants. Le composé $TiS_2$ étant conducteur électronique, l'ajout de carbone conducteur n'est pas nécessaire. Le pourcentage d'électrolyte solide dans le mélange est de 60%.

- Préparation de l'électrode négative Li-In :

Celle-ci est constituée d'une couche de lithium métal de 200 $\mu$m sur laquelle est déposée une couche d'indium de 100 $\mu$m.

- Etape d'assemblage:

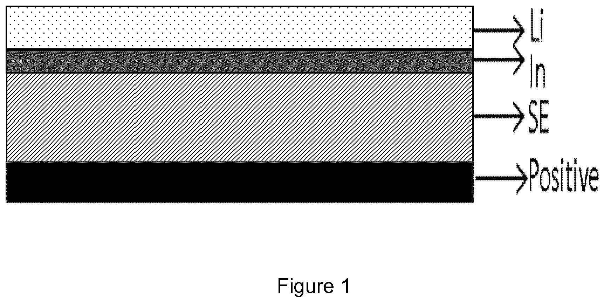

Une fine couche de mélange contenant la matière active positive est placée dans un moule de diamètre 9 mm. On dépose ensuite une couche d'électrolyte solide. Une pression de 2 tonnes est exercée à l'aide d'une presse. On obtient alors une pastille. Sur la couche d'électrolyte, on dépose ensuite la feuille d'indium puis celle de lithium. L'ensemble est testé dans une cellule électrochimique de type Swagelok$^{(™)}$. La structure de l'élément électrochimique obtenu est représentée schématiquement à la figure 1.

**Résultats** :

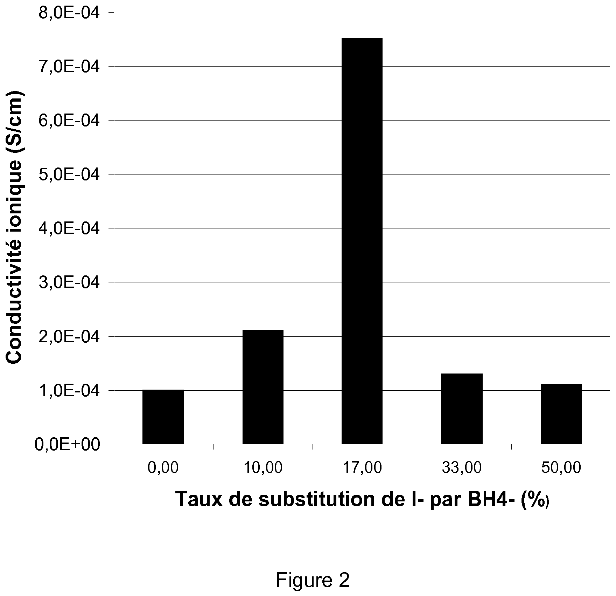

Le Tableau 2 ci-dessous rassemble les résultats des mesures de conductivité ionique. Les résultats obtenus pour les composés contenant l'iodure (Exemples de référence 1 et exemples 1 à 4) sont représentés graphiquement à la figure 2. Ces résultats montrent que pour un taux de substitution de 10, 17, 33 et 50 %, la conductivité ionique du composé est augmentée.

Tableau 2 : Résultat des mesures de conductivité ionique (S/cm)

| Exemple | Composé | Conductivité ionique à température ambiante (S/cm) | % augmentation de la conductivité par rapport au composé non substitué |
|---|---|---|---|
| Référence 1 | $Li_6PS_5I$ | $1,0 \times 10^{-4}$ | 0 |
| Ex.1 | $Li_6PS_5I_{0,90}(BH_4)_{0,10}$ | $2,1 \times 10^{-4}$ | 110 |
| Ex.2 | $Li_6PS_5I_{0,83}(BH_4)_{0,17}$ | $7,5 \times 10^{-4}$ | 650 |
| Ex.3 | $Li_6PS_5I_{0,67}(BH_4)_{0,33}$ | $1,3 \times 10^{-4}$ | 30 |
| Ex.4 | $Li_6PS_5I_{0,50}(BH_4)_{0,50}$ | $1,1 \times 10^{-4}$ | 10 |

(suite)

| Exemple | Composé | Conductivité ionique à température ambiante (S/cm) | % augmentation de la conductivité par rapport au composé non substitué |
|---|---|---|---|
| Référence 2 | $Li_6PS_5Cl$ | $1,5 \times 10^{-5}$ | 0 |
| Ex.5 | $Li_6PS_5Cl_{0,83}(BH_4)_{0,17}$ | $6,5 \times 10^{-5}$ | 333 |
| Contre exemple | 83 % de $Li_6PS_5I$ + 17 % de $LiBH_4$ | $8 \times 10^{-5}$ | -20 |

On constate pour la famille de composés $Li_6PS_5I_{1-z}(BH_4)_z$ que la conductivité ionique présente un maximum en fonction du taux de substitution de l'ion $I^-$ par l'ion $BH_4^-$. La valeur optimale du taux de substitution est comprise entre 10% et 33%, et proche de 17%.

L'augmentation de la conductivité ionique s'observe également lorsque l'élément X est le chlore. En effet, le composé de l'exemple 5 présente une conductivité ionique de $6,5 \times 10^{-5}$ S/cm alors que le composé de l'exemple de référence 2 présente une conductivité ionique de seulement $1,5 \times 10^{-5}$ S/cm. La substitution de 17% des ions $Cl^-$ par des ions $BH_4^-$ a permis de tripler la conductivité ionique.

Ces résultats ont été comparés avec celui obtenu pour le contre-exemple qui a été préparé par simple mélange des deux composés $Li_6PS_5I$ et $LiBH_4$. Dans ce cas, la conductivité du mélange est inférieure à celle du composé $Li_6PS_5I$ seul.

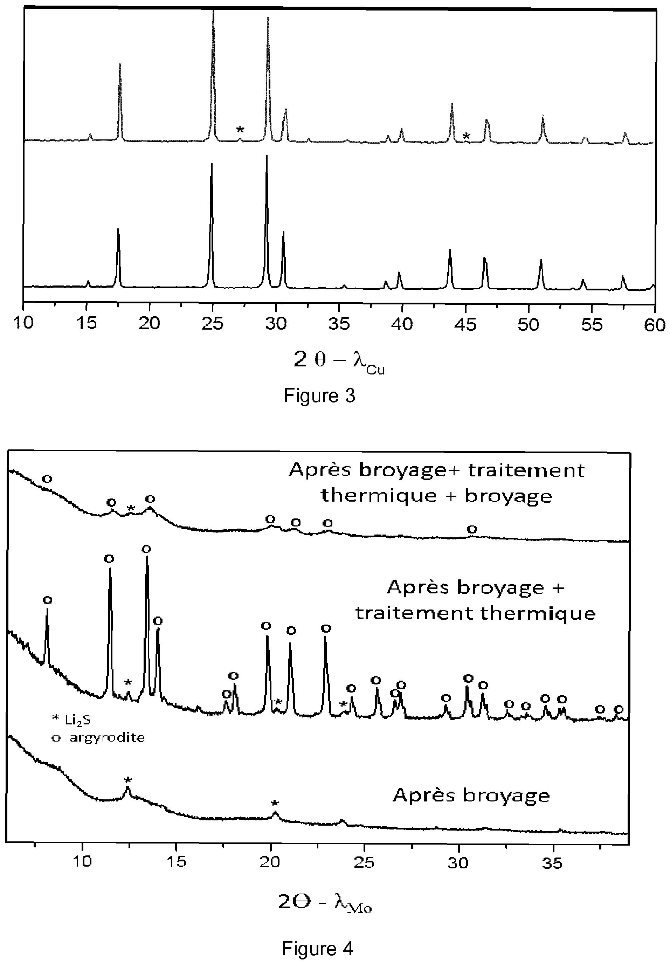

Afin de démontrer que l'ion $BH_4^-$ est incorporé dans la structure du composé $Li_6PS_5I$, un spectre de diffraction des rayons X a été réalisé sur le composé de l'exemple 2 et sur le composé de l'exemple de référence 1. Ces deux composés ont été soumis à un traitement thermique de manière à augmenter leur cristallinité. La figure 3 permet de comparer le spectre du composé de l'exemple 2 dans lequel 17% d'iodure ont été remplacés par l'ion $BH_4^-$ avec celui du composé de l'exemple de référence 1.

Le spectre du composé de l'exemple de référence 1 (spectre du bas) présente des pics attribuables à la présence de la phase argyrodite de structure cubique.

Le spectre du composé de l'exemple 2 (spectre du haut) diffère de celui de l'exemple de référence 1 principalement en ce qu'il fait apparaitre des pics de faible intensité attribuables à une faible quantité de $Li_2S$ utilisé comme réactif dans le mélange de départ et n'ayant pas réagi. Les pics attribuables à $Li_2S$ sont marqués par des astérisques (*). Ce spectre met également en évidence l'absence de phase $LiBH_4$, ce qui prouve que l'ion borohydrure s'est intégré dans la structure cristallographique du composé $Li_6PS_5I_{0,83}(BH_4)_{0,17}$ au cours de la mécanosynthèse.

Etude de l'influence du degré de cristallinité du composé sur la conductivité ionique du composé $Li_6PS_5I_{0,83}(BH_4)_{0,17}$ (exemple 2):

Un échantillon A a été préparé. Il provient du broyage du mélange des réactifs $Li_2S$, $P_2S_5$, $LiI$ et $LiBH_4$ pendant une durée de 20 heures à une vitesse de rotation de 600 tr/min dans le broyeur planétaire Fritsch de type Pulverisette 7, dans les conditions telles que décrites ci-avant. Le broyage a conduit à la formation du composé de l'exemple 2. Un spectre de diffraction des rayons X a été réalisé sur cet échantillon A. Ce spectre est représenté à la figure 4 (spectre du bas).

L'échantillon A a ensuite subi un traitement thermique à 550°C pendant 5 heures dans un autoclave étanche afin d'entrainer sa cristallisation. Un échantillon B est ainsi obtenu. Un spectre de diffraction des rayons X a été réalisé sur cet échantillon B. Ce spectre est représenté sur la Figure 4 (spectre du milieu).

L'échantillon B a ensuite été soumis à un broyage pour réduire son caractère cristallin. Un échantillon C a ainsi été obtenu. Un spectre de diffraction des rayons X a été réalisé sur cet échantillon C. Ce spectre est représenté sur la figure 4 (spectre du haut).

Le spectre de l'échantillon A montre uniquement des pics de faible intensité correspondant à la présence de la phase $Li_2S$.

Le spectre de l'échantillon B montre les pics de faibles intensité attribuables à la présence de la phase $Li_2S$ ainsi que des pics de forte intensité, bien définis, attribuables à $Li_6PS_5I_{0,83}(BH_4)_{0,17}$ cristallin.

Le spectre de l'échantillon C montre que la phase $Li_2S$ a presque disparu. Les pics attribuables à $Li_6PS_5I_{0,83}(BH_4)_{0,17}$ ont nettement diminué en intensité, ce qui indique que l'étape de broyage a rendu amorphe une quantité importante de $Li_6PS_5I_{0,83}(BH_4)_{0,17}$.

La conductivité ionique des échantillons A, B et C a été mesurée. Les valeurs de conductivité ionique sont indiquées dans le tableau 4 :

Tableau 4 : Effet de la cristallinité sur la conductivité du composé $Li_6PS_5I_{0,83}(BH_4)_{0,17}$

| Echantillon | Conditions de synthèse | Etat cristallin | Largeur à mi-hauteur du pic situé à un angle de 20° (*) | Conductivité à température ambiante (S/cm) |
|---|---|---|---|---|
| A | broyé | amorphe | - | $7,5\times10^{-4}$ |
| B | broyé puis traité thermiquement | structure cubique raies fines | 0,2° | $8\times10^{-6}$ |
| C | broyé puis traité thermiquement puis broyé | structure cubique raies larges | 0,8° | $9\times10^{-5}$ |
| * l'angle est mesuré en utilisant la longueur d'onde du molybdène | | | | |

Les mesures montrent que la conductivité ionique la plus élevée est obtenue pour l'échantillon A amorphe. Au contraire, la conductivité ionique la plus faible est obtenue pour l'échantillon B dans lequel $Li_6PS_5I_{0,83}(BH_4)_{0,17}$ est bien cristallisé. Une valeur intermédiaire de conductivité est observée pour l'échantillon C qui présente un degré de cristallinité intermédiaire entre l'état amorphe et l'état cristallin.

L'utilisation du composé selon l'invention comme électrolyte solide permet de diminuer la chute de tension induite par la résistance du séparateur. Le calcul suivant démontre cet avantage. Dans un élément électrochimique lithium-ion dont la capacité surfacique des électrodes serait de 4 mAh/cm² et dans lequel une couche de séparateur de 25 $\mu$m d'épaisseur serait constituée du composé de l'exemple de référence 1 ($Li_6PS_5I$), la chute de tension induite par le séparateur lors d'une décharge au régime de 10C est d'environ 1 V selon les équations

$$R=1/\sigma \ . \ e/S$$

avec

R : résistance du séparateur (Ohm),
$\sigma$ : conductivité de l'électrolyte (S/m),
e : épaisseur du séparateur (m),
S : surface du séparateur (m²) et
la chute de tension dans le séparateur est égale à $\Delta U = R \times I$, I étant le courant traversant le séparateur. Cette chute de tension est très importante car elle représente 27% de la tension en circuit ouvert d'un élément électrochimique lithium-ion comprenant une électrode positive dont la matière active serait constituée d'un oxyde lithié de nickel, de cobalt et d'aluminium (NCA) et comprenant une électrode négative dont la matière active serait constituée de graphite. En effet, la tension en circuit ouvert d'un tel élément est de l'ordre de 3,6V. Cette chute de tension diminue à 0,13 V lorsque le séparateur est constitué du composé de l'exemple 2 : $Li_6PS_5I_{0,83}(BH_4)_{0,17}$. Cette valeur de 0,13 V est tout à fait acceptable car elle ne représente plus que 3,6% de la tension en circuit ouvert. La réduction de cette chute de tension permet à l'élément électrochimique lithium-ion de fournir une tension plus élevée pour un régime de décharge donné.

Tableau 3 : Comparaison entre la chute de tension induite par un séparateur comprenant le composé de référence 1 et la chute de tension induite par un séparateur comprenant le composé $Li_6PS_5I_{0,83}(BH_4)_{0,17}$ de l'exemple 2.

| | conductivité (S/cm) | résistance du séparateur (ohm.cm²) | chute de tension due au séparateur (V) |
|---|---|---|---|
| Exemple de référence 1 $Li_6PS_5I$ | $1,0\times10^{-4}$ | 25 | 1 |
| Exemple 2 $Li_6PS_5I_{0,83}(BH_4)_{0,17}$ | $7,5\times10^{-4}$ | 3,33 | 0,13 |

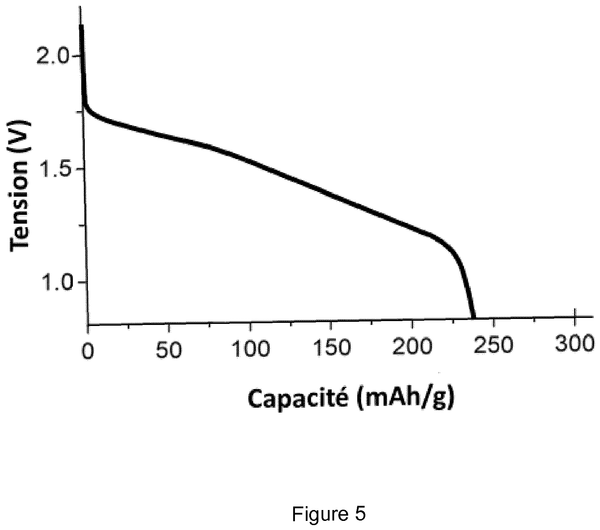

La figure 5 représente à titre informatif la courbe de décharge au régime de C/20 à température ambiante d'un élément électrochimique comprenant:

- une matière active positive à base de $TiS_2$ ;
- un électrolyte solide constitué du composé $Li_6PS_5Cl_{0,83}(BH_4)_{0,17}$ ;
- une matière active négative à base d'indium et de lithium.

La valeur de capacité massique mesurée en décharge à C/20 est de 238 mAh/g. Elle est quasiment égale à la capacité théorique de $TiS_2$ (239 mAh/g), ce qui montre que l'électrolyte fonctionne très bien à température ambiante.

**Revendications**

1. Composé de formule $Li_{7-x}PS_{6-x}X_{x-z}(BH_4)_z$ dans lequel :

   X est choisi dans le groupe consistant en Cl, Br, I, F et CN
   $0<x\leq2$
   $0<z\leq0,50$.

2. Composé selon la revendication 1, dans lequel x=1.

3. Composé selon la revendication 1 ou 2, dans lequel X est I ou Cl.

4. Composé selon l'une des revendications 1 à 3, dans lequel $0,1\leq z\leq0,35$.

5. Composé selon l'une des revendications 1 à 4, dans lequel $0,1\leq z\leq0,20$.

6. Composé selon l'une des revendications 1 à 5, dans lequel $0,15\leq z\leq0,20$.

7. Composé selon l'une des revendications précédentes, sous forme amorphe.

8. Procédé de préparation d'un composé selon l'une des revendications 1 à 7, comprenant les étapes de :

   a) mise à disposition d'un mélange comprenant $Li_2S$, $P_2S_5$, $LiBH_4$ et LiX où X est choisi dans le groupe consistant en Cl, Br, I, F et CN ;
   b) broyage du mélange pendant une durée suffisante pour permettre l'incorporation de LiBH4 dans le composé $Li_{7-x}PS_{6-x}X_{x-z}(BH_4)_z$.

9. Procédé de préparation selon la revendication 8, dans lequel l'étape b) de broyage est effectuée pendant une durée d'au moins 15 heures, de préférence au moins 20 heures.

10. Elément électrochimique comprenant un électrolyte solide comprenant le composé selon l'une des revendications 1 à 7.

11. Elément électrochimique selon la revendication 10, dans lequel l'électrolyte solide ne contient pas $LiBH_4$.

12. Elément électrochimique selon la revendication 10 ou 11, comprenant en outre:

   - au moins une électrode négative comprenant une matière active choisie dans le groupe consistant en le carbone, l'étain, le silicium, le lithium et l'indium ;
   - au moins une électrode positive comprenant une matière active choisie dans le groupe consistant en les oxydes lithiés de métaux de transition et les composés soufrés.

13. Elément électrochimique selon la revendication 12, dans lequel:

   - la matière active de l'électrode négative est choisie dans le groupe consistant en le lithium et l'indium ;
   - la matière active de l'électrode positive est choisie dans le groupe consistant en S, $TiS_2$, $TiS_3$, $TiS_4$, NiS, $NiS_2$, CuS, $FeS_2$, $Li_2S$, $MoS_3$, les polyacrylonitriles-soufre, le dithiooxamide et les composés disulfurés.

**14.** Procédé de fabrication d'un élément électrochimique à électrolyte solide, ledit procédé comprenant les étapes de :

a) préparation d'un mélange contenant une matière électrochimiquement active positive et éventuellement le composé selon l'une des revendications 1 à 7;

b) dépôt sur le mélange obtenu à l'étape a) d'une couche du composé selon l'une des revendications 1 à 7 pour former un électrolyte solide;

c) dépôt d'au moins une couche d'un mélange contenant une matière électrochimiquement active négative et éventuellement le composé selon l'une des revendications 1 à 7 sur une face libre de la couche de composé formant l'électrolyte solide.

**15.** Utilisation d'un anion contenant du bore comme substituant d'un ion halogénure dans un composé de formule $Li_{7-x}PS_{6-x}X_x$

où X est choisi dans le groupe consistant en Cl, Br, I, F et CN et $0<x\leq2$ pour augmenter la conductivité ionique de ce composé.

## Patentansprüche

**1.** Verbindung der Formel $Li_{7-x}PS_{6-x}X_{x-z}(BH_4)_z$, wobei:

X ausgewählt ist aus der Gruppe bestehend aus Cl, Br, I, F und CN,
$0<x\leq2$ ist,
$0<z\leq0{,}50$ ist.

**2.** Verbindung nach Anspruch 1, wobei x=1 ist.

**3.** Verbindung nach Anspruch 1 oder 2, wobei X für I oder Cl steht.

**4.** Verbindung nach einem der Ansprüche 1 bis 3, wobei $0{,}1\leq z\leq0{,}35$ ist.

**5.** Verbindung nach einem der Ansprüche 1 bis 4, wobei $0{,}1\leq z\leq0{,}20$ ist.

**6.** Verbindung nach einem der Ansprüche 1 bis 5, wobei $0{,}15\leq z\leq0{,}20$ ist.

**7.** Verbindung nach einem der vorangehenden Ansprüche in amorpher Form.

**8.** Verfahren zur Herstellung einer Verbindung nach einem der Ansprüche 1 bis 7, umfassend die Schritte:

a) Bereitstellen eines Gemischs, umfassend $Li_2S$, $P_2S_5$, $LiBH_4$ und LiX, wobei X ausgewählt ist aus der Gruppe bestehend aus Cl, Br, I, F und CN;

b) Mahlen der Mischung für eine ausreichende Zeit, um den Einbau von LiBH4 in die Verbindung $Li_{7-x}PS_{6-x}X_{x-z}(BH_4)_z$ zu ermöglichen.

**9.** Verfahren zur Herstellung nach Anspruch 8, wobei der Mahlschritt b) über einen Zeitraum von mindestens 15 Stunden, vorzugsweise von mindestens 20 Stunden, durchgeführt wird.

**10.** Elektrochemische Zelle, umfassend einen Festelektrolyten, der die Verbindung nach einem der Ansprüche 1 bis 7 umfasst.

**11.** Elektrochemische Zelle nach Anspruch 10, wobei der Festelektrolyt kein $LiBH_4$ enthält.

**12.** Elektrochemische Zelle nach Anspruch 10 oder 11, ferner umfassend:

- mindestens eine negative Elektrode, umfassend ein aktives Material, ausgewählt aus der Gruppe bestehend aus Kohlenstoff, Zinn, Silizium, Lithium und Indium;
- mindestens eine positive Elektrode, umfassend ein aktives Material, ausgewählt aus der Gruppe bestehend aus Lithium-Übergangsmetalloxiden und Schwefelverbindungen.

13. Elektrochemische Zelle nach Anspruch 12, wobei:

- das aktive Material der negativen Elektrode ausgewählt ist aus der Gruppe bestehend aus Lithium und Indium;
- das aktive Material der positiven Elektrode ausgewählt ist aus der Gruppe bestehend aus S, $TiS_2$, $TiS_3$, $TiS_4$, NiS, $NiS_2$, CuS, $FeS_2$, $Li_2S$, $MoS_3$, Polyacrylnitril-Schwefel, Dithiooxamid und Di sulfidverbindungen.

14. Verfahren zur Herstellung einer elektrochemischen Zelle mit Festelektrolyt, wobei das Verfahren die folgenden Schritte umfasst:

a) Herstellen eines Gemischs, das ein positives elektrochemisch aktives Material und gegebenenfalls die Verbindung nach einem der Ansprüche 1 bis 7 enthält;
b) Abscheiden einer Schicht der Verbindung nach einem der Ansprüche 1 bis 7 auf dem in Schritt a) erhaltenen Gemisch, um einen Festelektrolyten zu bilden;
c) Abscheiden mindestens einer Schicht aus einem Gemisch, das ein negatives elektrochemisch aktives Material und gegebenenfalls die Verbindung nach einem der Ansprüche 1 bis 7 enthält, auf einer freien Seite der Schicht der Verbindung, die den Festelektrolyten bildet.

15. Verwendung eines borhaltigen Anions als Substituent für ein Halogenidion in einer Verbindung der Formel $Li_{7-x}PS_{6-x}X_x$ wobei X ausgewählt ist aus der Gruppe bestehend aus Cl, Br, I, F und CN und $0<x\leq2$ ist, um die Ionenleitfähigkeit dieser Verbindung zu erhöhen.

**Claims**

1. A compound of formula $Li_{7-x}PS_{6-x}X_{x-z}(BH_4)_z$ wherein:

X is selected from the group consisting of Cl, Br, I, F and CN
$0<x\leq2$
$0<z\leq0.50$.

2. The compound as claimed in claim 1, wherein x=1.

3. The compound as claimed in claim 1 or 2, wherein X is I or Cl.

4. The compound as claimed in one of claims 1 to 3, where $0.1\leq z\leq0.35$.

5. The compound as claimed in one of claims 1 to 4, where $0.1\leq z\leq0.20$.

6. The compound as claimed in one of claims 1 to 5, where $0.15\leq z\leq0.20$.

7. The compound as claimed in one of the preceding claims, in amorphous form.

8. A process for preparing a compound as claimed in one of claims 1 to 7, comprising the steps of:

a) providing a mixture comprising $Li_2S$, $P_2S_5$, $LiBH_4$ and LiX wherein X is selected from the group consisting of Cl, Br, I, F and CN;
b) grinding the mixture for a period of time sufficient to allow the incorporation of LiBH4 into the compound $Li_{7-x}PS_{6-x}X_{x-z}(BH_4)_z$.

9. The preparation process as claimed in claim 8, wherein the grinding step b) is carried out for a period of at least 15 hours, preferably at least 20 hours.

10. An electrochemical cell comprising a solid electrolyte comprising the compound as claimed in one of claims 1 to 7.

11. The electrochemical cell as claimed in claim 10, wherein the solid electrolyte does not contain $LiBH_4$.

12. The electrochemical cell as claimed in claim 10 or 11, further comprising:

- at least one negative electrode comprising an active material selected from the group consisting of carbon, tin, silicon, lithium and indium;
- at least one positive electrode comprising an active material selected from the group consisting of lithiated transition metal oxides and sulfur compounds.

13. The electrochemical cell as claimed in claim 12, wherein:

- the active material of the negative electrode is selected from the group consisting of lithium and indium;
- the active material of the positive electrode is selected from the group consisting of S, $TiS_2$, $TiS_3$, $TiS_4$, NiS, $NiS_2$, CuS, $FeS_2$, $Li_2S$, $MoS_3$, polyacrylonitriles-sulfur, dithiooxamide and disulfur compounds.

14. A process for manufacturing a solid-electrolyte electrochemical cell, said process comprising the steps of:

a) preparing a mixture containing a positive electrochemically active material and optionally the compound as claimed in one of claims 1 to 7;
b) depositing on the mixture obtained in step a) a layer of the compound as claimed in one of claims 1 to 7 to form a solid electrolyte;
c) application of at least one layer of a mixture containing a negative electrochemically active material and optionally the compound as claimed in one of claims 1 to 7 on a free side of the compound layer forming the solid electrolyte.

15. Use of a boron-containing anion as substituent for a halide ion in a compound of formula $Li_{7-x}PS_{6-x}X_x$ where X is selected from the group consisting of Cl, Br, I, F and CN and $0<x\leq2$ to increase the ionic conductivity of this compound.

Figure 1

Figure 2

Figure 3

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2016134316 A
- EP 3043411 A

- US 2016156064 A

**Littérature non-brevet citée dans la description**

- *J. Amer. Ceram. Soc.,* 2001, vol. 84, 477
- **SYLVAIN BOULINEAU et al.** Mechanochemical synthesis of Li-argyrodite Li6PS5X (X=Cl, Br, I) as sulfur-based solid electrolytes for all solid state batteries application. *SOLID STATE IONICS,* 05 Juin 2012, vol. 221, 1-5

- **YAMAUCHI AKIHIRO et al.** Préparation and ionic conductivities of (100-x)(0.75Li2S•0.25P2S5)•xLiBH4 glass electrolytes. *JOURNAL OF POWER SOURCES,* 2013, vol. 244, 707-710